# EUROPÄISCHE PATENTSCHRIFT

(11) **EP 0 621 672 B1**
(45) Veröffentlichungstag und Bekanntmachung des Hinweises auf die Patenterteilung: **06.11.1996**
(21) Anmeldenummer: 94105358.9
(22) Anmeldetag: 07.04.1994
(51) Int. Cl.: H02G 3/26, F16L 3/12

(54) **Leitungshalter für Verdrahtungen in Niederspannungsschaltkreisen elektrischer Geräte**
Conductor support for wiring of low-tension circuits in electrical apparatus
Elément de support de conducteurs pour le câblage de circuits à basse tension d'appareils électriques

(30) Priorität: 20.04.1993 DE 4312779
(43) Veröffentlichungstag der Anmeldung: 26.10.1994
(73) Patentinhaber: Vossloh Schwabe GmbH, D-73660 Urbach (DE)
(72) Erfinder:
(74) Vertreter: Rüger, Rudolf, Dr.-Ing.

(56) Entgegenhaltungen:
- GB-A- 2 081 363
- US-A- 4 695 018

## Beschreibung

Die Erfindung betrifft einen Leitungshalter für Verdrahtungen in Niederspannungsschaltkreisen elektrischer Geräte, mit einem mit Befestigungseinrichtungen versehenen Sockel und mit wenigstens zwei mit diesem verbundenen Schenkeln, zwischen den ein die Leitungen aufnehmender durchgehender Kanal begrenzt ist, der unter Ausbildung einer Leitungseinführöffnung an einer Seite über seine Länge geöffnet ist und dem federelastische Rückhaltemittel für in dem Kanal aufgenommene Leitungen zugeordnet sind, die normalerweise in einer den freien Durchtrittsquerschnitt des Kanals und/oder der seitlichen Leitungseinführöffnung begrenzenden Stellung stehen.

Bei der Verdrahtung der Niederspannungsschaltkreise elektrischer Geräte, beispielsweise in Schaltkästen, Leuchten etc. aber auch auf Leiterplatten oder Schalttafeln u.dgl. werden die zwischen den einzelnen Anschlußpunkten der Schaltelemente sich erstreckenden elektrischen Leitungen entweder zu häufig vorgefertigten Kabelbäumen zusammengefasst oder aber einzeln verlegt. In der Praxis ist es bekannt, Kabelbäume mittels Schellen, Bündelhaltern, Haltebändern etc. auf der Unterlage zu befestigen, um damit einen mechanisch stabilen Geräteaufbau zu erzielen. Auch einzeln verlegte Leitungen größerer Länge erfordern eine Abstützung und Halterung an Zwischenpunkten, um genau definierte Leitungswege festzulegen und um sicherzustellen, daß keine unerwünschte Beweglichkeit der Leitungen auftritt, die beim Betrieb des Gerätes zu Unzuträglichkeiten führt. Es gibt in der Praxis eine ganze Reihe vielfältiger Leitungshalter für Leitungen auch in Gestalt von Rund- und Flachkabeln, die z. Bsp. in Clipform oder nach Art von U-förmigen Bügeln ausgebildet sind, zwischen deren Schenkeln die einzelnen Leitungen gehalten sind. An den freien Enden der Schenkel sind Laschen, Lappen oder deckelartige Teile angeformt, die als Rückhaltemittel für die Leitungen wirkend nach dem Einlegen der Leitungen in den Kanal entweder in einem eigenen Arbeitsgang verrastet werden oder aber selbsttätig zusammenschnappen, um die Leitungseinführöffnung so weit zu verschließen, daß die Leitungen nicht mehr aus dem Kanal austreten können.

Gemeinsam ist diesen bekannten Leitungshaltern, daß sie so ausgebildet sind, daß die Leitungen in einer quer zu ihrer Längsrichtung gerichteten Bewegung durch die Einführöffnung in den die Leitungen aufnehmenden Kanal eingedrückt werden (z. Bsp. GB-A-208 1363).

Im Zuge der zunehmenden Rationalisierung der Geräteherstellung besteht das Bedürfnis die Verdrahtung automatisch vorzunehmen, ohne dazu auf vorgefertigte Kabelbäume zurückgreifen zu müssen. Zu diesem Zwecke wird ein Leitungsverlegewerkzeug verwendet, das programmgesteuert von einem Roboter längs eines vorgegebenen Verlegeweges zwischen den miteinander zu verbindenden Anschlußpunkten geführt wird und das dabei die ihm endlos von einer Rolle zugeführte Leitung von einem Anschlußpunkt zu dem nächsten führt. Wenn die Anordnung der Anschlußpunkte größere Leitungslängen erfordert, müssen, wie erwähnt, an Zwischenstellen des Verlegeweges Leitungshalterungen vorgesehen werden, die ortsfest angeordnet sind und in die Leitungen eingelegt werden müssen.

Die bisher bekannten Leitungshalterungen machen es erforderlich, daß entweder das Verlegewerkzeug einen eigenen Einlegevorgang der Leitungen in den Leitungshalter vornimmt, wozu in der Regel zusätzliche quer zu der Verlegungsrichtung gerichtete Einlegebewegungen erforderlich sind oder aber es müssen die Leitungen nach dem Verlegen von Hand in die Leitungshalter eingefügt werden, deren Leitungsrückhaltungsmittel gegebenenfalls anschließend ebenfalls von Hand noch zu verschließen sind.

Aufgabe der Erfindung ist es deshalb, einen Leitungshalter für Verdrahtung in Niederspannungsschaltkreisen elektrischer Geräte zu schaffen, der für eine vollautomatische Herstellung der Verdrahtung, insbesondere unter Verwendung eines längs eines vorbestimmten Verlegeweges bewegten Leitungsverlegewerkzeuges geeignet ist, derart, daß er keine zeitliche Verzögerung des Verlegevorgangs bedingt.

Zur Lösung dieser Aufgabe ist der eingangs genannte Leitungshalter erfindungsgemäß dadurch gekennzeichnet, daß der Kanal für ein durch die Einführöffnung ragendes in Leitungslängsrichtung bewegtes Werkzeug über seine Länge durchfahrbar gestaltet ist und daß die den Kanal begrenzenden Schenkel und/oder die Leitungsrückhaltemittel dem durchlaufenden Werkzeug vorübergehend federelastisch ausweichend ausgebildet sind.

Durch diese Gestaltung des neuen Leitungshalters wird erreicht, daß das Verlegewerkzeug den Leitungshalter bei seiner Verlegebewegung auf dem vorgegebenen Verlegeweg einfach durchfahren kann, ohne daß es in der Regel seine Geschwindigkeit ändern muß. Nach dem Durchfahren des Verlegewerkzeugs und dem dabei erfolgten Einlegen der jeweiligen Leitung in den Kanal kehren die vorübergehend federnd ausgewichenen Rückhaltemittel wieder in ihre ursprüngliche Ausgangslage zurück, in der die Leitung sicher gehalten ist, ohne daß dazu zusätzliche Maßnahmen, insbesondere von Hand, erforderlich wären. Zusätzlich können aber im Bedarfsfall auch von Hand durch die Einführöffnungen Leitungen eingelegt werden, die ebenso sicher gehalten sind.

Der Leitungshalter kann in einer Ausführungsform wenigstens ein die Leitungseinführöffnung zumindest teilweise überrragendes Halteglied aufweisen, das federelastisch ausweichend ausgebildet und/oder gelagert ist. Dieses Halteglied kann eine seitlich der Leitungsöffnung gelagerte biegsame Zunge sein, wobei in einer bevorzugten Ausführungsform die Anordnung derart getroffen ist, daß beidseitig des Kanals jeweils eine solche biegsame Zunge vorgesehen ist. Die beiden Zungen können mit ihren freien Enden entweder in geringem Abstand voneinander enden oder aber einander übergreifend ausgebildet sein. Sehr einfache Verhältnisse ergeben sich, wenn jede Zunge in Gestalt eines hochkant stehenden dünnen Plättchens ausgebildet ist, das von dem durchfahrenden Werkzeug nach Art einer "Schwingtür" einfach federelastisch zur Seite geschwenkt oder gebogen werden kann und das anschließend unter der Wirkung seiner Eigenelastizität wieder in seinen wirksamen Ausgangszustand zurückkehrt.

Um eine geordnete Anordnung der gehalterten Leitungen zu gewährleisten, kann der Kanal wenigstens eine taschenartige Erweiterung aufweisen, deren lichte Weite kleiner/gleich dem Leitungsaußendurchmesser ist. Die Leitungen werden in dieser taschenartigen Erweiterung festgeklemmt; sie liegen in Reihe neben oder übereinander. Das Einführen der Leitungen aus dem Kanal in die taschenartige Erweiterung kann durch das Verlegewerkzeug selbst erfolgen, das dazu erforderlichenfalls eine kleine Seitenbewegung ausführt.

Möglich ist es auch, daß der Kanal durch wenigstens ein vom Boden vorragendes Trennglied in Längsrichtung unterteilt ist, so daß sich ein Doppel- oder Mehrfachkanal ergibt, in dem die einzelnen Leitungen oder Leitungsgruppen voneinander getrennt gehalten sind.

Der Leitungshalter ist durchweg einstückig aus einem isolierenden Kunststoff, beispielsweise Polyethylen oder Polyamid geformt; er kann in seiner Gestalt weitgehend den jeweiligen Erfordernissen des Einsatzzweckes angepaßt werden. So kann sein Kanal durch ein mit dem Sockel verbundenes die Schenkel enthaltendes Formteil verlaufen, das im wesentlichen in Gestalt einer quer zu der Kanallängsrichtung verlaufenden ausgerichteten Platte ausgebildet ist.

Bei anderen Ausführungformen sind die den Kanal begrenzenden Schenkel in Form von längeren Wandteilen gestaltet so daß die Leitungen über eine größere Länge seitlich abgestützt und gehalten sind.

Als vorteilhaft hat es sich erwiesen, wenn der Leitungshalter an den Kanal auf wenigstens einer Stirnseite anschließend federelastische Klemmmittel für in den Kanal eingelegte Leitungen aufweist. Mit diesen Klemmmitteln wird erreicht, daß bei dem von der Stirnseite her erfolgenden Einfahren des Leitungsverlegewerkzeuges in den Kanal zunächst die Klemmmittel durchfahren werden, die sich nach dem Durchfahren des Verlegewerkzeuges sogleich von selbst klemmend an die eingelegte Leitung anlegen und diese in ihrer Lage festhalten, bevor das Verlegewerkzeug den Kanal selbst durchlaufen hat und damit das in dem Kanal liegende Leitungsstück frei gibt.

In einer praktischen Ausführungsform können die Klemmmittel wenigstens einen federelastischen Klemmbügel aufweisen, der sich über die Höhe des Kanales erstreckt und mit einem ihm gegenüber liegenden Klemmbügel oder einem Widerlager eine Klemmstelle begrenzt. In dieser Klemmstelle sind nacheinander eingelegte Leitungen in einer Reihe übereinander liegend genau geordnet gehalten, was den Vorteil mit sich bringt, daß sich zumindest abschnittsweise in der Nähe des Leitungshalters gleich lange und gleich gestaltete Leitungsverlegewege für die einzelnen Leitungen ergeben. Wären nämlich die Leitungen nebeneinander oder gar ungeordnet verlegt, so ergäben sich bei Biegungen des gemeinsamen Verlegeweges in der Horizontalebene unterschiedliche Verlegewege, die Programmierung des Verlegewerkzeuges erschweren oder aber zu unerwünschten Leitungsüberkreuzungen führen.

Um die Klemmwirkung zu erhöhen, ist es zweckmäßig, wenn die Klemmstelle zumindest auf einer Seite durch eine Klemmkante an einem Klemmbügel oder an dem Widerlager begrenzt ist. Ein solcher Klemmbügel und/oder das Widerlager kann auch eine trichterförmig nach innen weisenden Einführschräge für das Werkzeug aufweisen, was in einfacherer Weise in der Weise erzielt werden kann, daß der Klemmbügel ein im wesentlichen teilzylindrisch eingerolltes Wandteil aufweist, das an einem mit dem Sockel oder einem Schenkel verbundenen Haltearm angeordnet ist, mit dem es über zumindest einen Teil seiner Höhe verbunden ist. Zur Erhöhung der Beweglichkeit kann der Haltearm vondem benachbarten Schenkel durch ein Schlitz getrennt sein, der sich über zumindest einen Teil der Höhe des Schenkels erstreckt.

Zur Erleichterung des Durchfahrens des Verlegefahrzeugs kann auch das an wenigstens einem Schenkel angeordnete Halteglied stirnseitig eine trichterförmig nach innen weisende Einführschräge für das Werkzeug aufweisen. Außerdem kann, um das Einlegen von zusätzlichen Leitungen von Hand zu erleichtern, dieses Halteglied ebenso wie die erwähnten Klemmmittel mit einer zum Kanalboden hin geneigten Einführschräge für die Leitungen ausgebildet sein.

Die an dem Sockel angeordneten Befestigungsmittel, beispielsweise in Gestalt von Zapfen, Spreizbügeln oder dergleichen sind zweckmäßigerweise so ausgebildet, daß der Leitungshalter verdrehsicher befestigt ist und demgemäß immer seine für das Durchfahren des Leitungsverlegewerkzeugs erforderliche Ausrichtung beibehält. Schließlich kann an dem Sockel oder einem mit diesem verbundenen Teil eine von außen ablesbare Codierung angeordnet sein, die zum einen eine Identifizierung des jeweiligen Leitungshalters und/oder der einzelnen eingelegten Leitungen durch an dem Leitungsverlegewerkzeug angeordnete Codeerkennungsmittel ermöglicht.

In der Zeichnung sind Ausführungsbeispiele des Gegenstandes der Erfindung dargestellt. Es zeigen:
- Fig. 1: einen Leitungshalter gemäß der Erfindung in einer ersten Ausführungsform in perspektivischer Darstellung,
- Fig. 2: den Leitungshalter nach Fig. 1 in einer Draufsicht und in einem anderen Maßstab,
- Fig. 3: den Leitungshalter nach Fig. 2 in einer stirnseitigen Seitenansicht von links,
- Fig. 4: den Leitungshalter nach Fig. 2 in einer Seitenansicht,
- Fig. 5: den Leitungshalter nach Fig. 4 geschitten längs der Linie V - V der Fig. 2 in einer Seitenansicht,
- Fig. 6: einen Leitungshalter gemäß der Erfindung in einer zweiten Ausführungsform und in perspektivischer Darstellung und
- Fig. 7: den Leitungshalter nach Fig. 6 in einer abgewandelten Ausführungsform und in einer perspektivischen Darstellung sowie in einem anderen Maßstab.

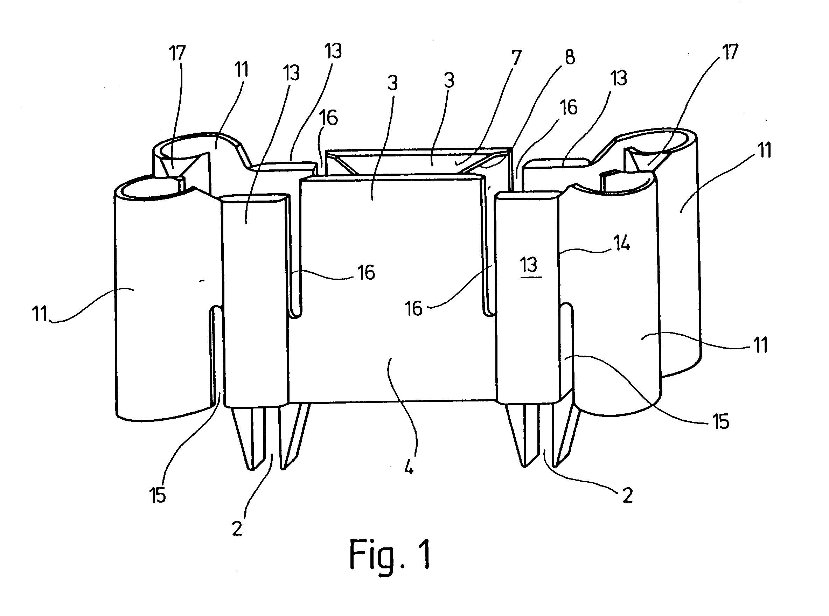

Der in den Fig. 1 bis 5 in einer ersten Ausführungsform dargestellte Leitungshalter weist einen Sockel auf, der aus zwei ebenen Bodenteilen 1 besteht, die jeweils einen angeformten Rastfuß 2 tragen. Die beiden Rastfüße 2 erlauben eine schnelle Montage des Leitungshalters durch Druck-Einrastbefestigung in entsprechenden Bohrungen der Gerätebodenplatte. Gleichzeitig ist dabei eine verdrehsichere Fixierung des Leitungshalters gewährleistet.

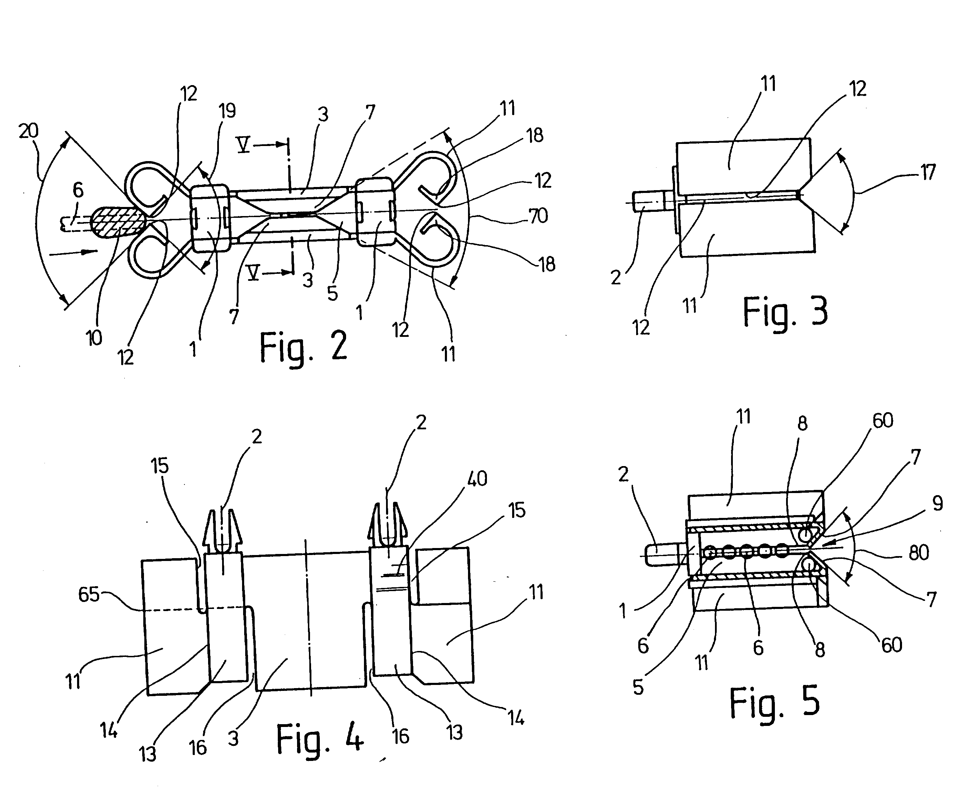

An die beiden Bodenteile schließen sich zwei im Abstand einander gegenüberstehende Schenkel 3 an, die jeweils an eine zwischen den beiden Bodenteilen durchgehende leistenförmige Wandpartie 4 angeformt sind und die gemeinsam mit den Wandpartien 4 einen geraden durchgehenden Kanal 5 begrenzen, der zur Aufnahme von bei 6 angedeuteten Leitungen (Fig. 5) dient. An die beiden ebenen Schenkel 3 sind im Bereiche der oberen Kanten zwei dünne Leisten 7 angeformt, die in der insbesondere aus Fig. 5 ersichtlichen Weise (bei 80) trichterförmig schräg nach innen zu verlaufend mit ihren freien parallelen Längskanten 8 eines sich über die Länge des Kanales 5 erstreckende Leitungseinführöffnung an der Oberseite des Leitungshalters begrenzen. An ihren Stirnseiten sind die im wesentlichen trapezförmig gestalteten Leisten 7 (bei 70) trichterförmig nach innen zu geneigt, wodurch eine Einführschräge für ein noch zu erläuterndes bei 10 angedeutetes Leitungsverlegewerkzeug gebildet ist.

Stirnseitig an den Kanal 5 anschließend sind auf beiden Seiten der Schenkel 3 Leitungsklemmmittel vorgesehen, die jeweils aus zwei teilzylindrisch eingerollten Klemmbügeln 11 bestehen, die mit zueinander parallelen angeformten Klemmkanten 12 eine symmetrisch zu der Längssymmetrieebene des Kanals 5 liegende Klemmstelle begrenzen, die sich über die Höhe des Kanals 5 erstreckt. Der Abstand der beiden geraden Kanten 12 ist kleiner als der Durchmesser der einzulegenden Leitungen 6, so daß diese zwischen den Kanten 12 an der jeweiligen Klemmstelle sicher in einer übereinander liegenden Reihe gehalten sind (vergleiche Fig. 5).

Die beiden Klemmbügel 11 sind auf jeder Stirnseite an zwei Wandungsteile des Kanales 5 bildende oberhalb der Bodenteile 1 an die jeweilige Wandpartie 4 angeformte leistenartige Haltearme 13 bei 14 angeformt. Um ihre scharnierartige elastische Beweglichkeit längs der Befestigungslinien bei 14 zu erhohen, sind sie über einen Teil ihrer Höhe ausgehend von den Bodenteilen 1 von dem Befestigungsarmen 13 durch jeweils einen Schlitz 15 getrennt. Auf der anderen Seite ist zwischen jedem Haltearm 13 und dem benachbarten Schenkel 3 ebenfalls ein von oben her verlaufender Trennschlitz 16 vorgesehen, der sich bis zu der durchgehenden Wandpartie 4 erstreckt und die elastische Beweglichkeit der Schenkel 3 quer zu der Längsmittelebene des Kanals 5 erhöht.

Jedes Klemmbügelpaar 11 weist schließlich im Bereiche der von den beiden vertikalen Kanten 12 begrenzten Klemmstelle oben nach unten zu trichterförmig zusammenlaufende Einführschrägen 17 auf, die das Einführen von Leitungen 6 in die jeweilige Klemmstelle sowie in den Kanal 5 erleichtern. Die die Klemmstelle begrenzenden Kanten 12 sind die vertikalen Eckkanten zweier an das jeweilige Bügelpaar 11 angeformter Winkelstücke 18, die derart angeordnet sind, daß sie beidseitig in Kanallängsrichtung jeweils einen Winkel 19 bzw. 20 (Fig. 2) von 90° miteinander begrenzen. Die Schlitze 15, 16 schließlich reichen von unten bzw. von oben her ungefähr an eine gemeinsame Ebene 65 heran, die parallel zu dem Sockel orientiert ist.

Beim automatischen Verlegen einer Leitung 6 wird diese von dem Verlegekopf des programmgemäß bewegten Leitungsverlegewerkzeugs 10 mit ihrem freien Ende bezogen auf Fig. 2 von links an die Stirnseite des Leitungshalters herangeführt. Der Leitungsverlegekopf tritt in den Winkelbereich 20 ein, durch dessen Begrenzungsflächen der Leitungshalter selbsttätig exakt auf die in dem Leitungsverlegekopf 10 erfaßte Leitung 6 ausgerichtet wird. Im Verlaufe der Vorbewegung des Leitungsverlegekopfs 10 werden die beiden Bügel 11 federelastisch nach außen gespreizt, so daß sie seitlich ausweichend den Leitungsverlegekopf 10 durchlassen, der unmittelbar hinter den Kanten 12 in den Winkelbereich 19 eintritt und von dort aus sich zwischen die Haltearme 13 und sodann in den Kanal 5 hineinbewegt.

Da die Kanten 12 im Scheitel zweier einander gegenüberliegender Winkelstücke 18 verlaufen, kommen die Bügel 11 unter der Wirkung ihrer Eigenelastizität selbsttätig sofort wieder in ihre Ausgangs-Klemmstellung zurück (Fig. 2), sowie der Leitungsverlegekopf 10 die Eng- oder Klemmstelle zwischen den Kanten 12 passiert hat. Damit wird erreicht, daß die Kanten 12 die zu verlegende Leitung 6 beim Passieren des Leitungsverlegekopfes unmittelbar hinter diesem klemmend erfassen und reibschlüssig festhalten, so daß eine exakt geordnete Ablage der Leitung gewährleistet bleibt.

Der in den Kanal 5 einlaufende Leitungsverlegekopf 10 trifft auf die stirnseitige Einlaufschräge 70 der beiden Leisten 7; die Schenkel 3 mit den Leisten 7 werden elastisch ausweichend zur Seite gedrängt und kehren nach dem Passieren des Leitungsverlegekopfes wieder in ihre Ausgangsstellung nach Fig. 2 zurück, vorzugsweise bevor der Leitungsverlegungskopf 10 in die Eng- oder Klemmstelle zwischen den Kanten 12 des zweiten Bügelpaares 11 eintritt. Da der Eintritt in diese Eng- oder Klemmstelle durch den trichterförmig sich verjüngenden Winkelbereich 19 erfolgt, werden die Bügel 11 des zweiten Bügelpaars beim Durchlaufen des Leitungsverlegekopfes 10 ebenfalls federelastisch nach der Seite hin ausweichend aufgebogen. Sie schließen sich hinter dem Leitungsverlegekopf selbsttätig, womit die verlegte Leitung 6 auch an diesem Ende des Leitungshalters exakt lagerichtig reibschlüssig festgeklemmt ist.

Da die Kanten 11 an beiden Stirnseiten des Leitungshalters jeweils die Eckkanten von Winkelstücken 18 sind, die einen Winkel von 90° miteinander einschließen, kann die Leitung 6 bei der weiteren Verlegebewegung des Leitungsverlegekopfes einfach durch den Leitungshalter axial durchgezogen werden, ohne daß sich die Bügel mit der Leitungsisolation verhaken oder diese beschädigen können.

Die geschilderte Ausbildung der Bügel 11 und der zwischen deren Kanten 12 begrenzten vertikal ausgerichteten Klemmstellen gewährleistet, daß nacheinander verlegte Leitungen 6 zwischen den Kante 12 in einer exakten vertikalen Ausrichtung übereinanderliegend gereiht gehalten werden, wie dies in Fig. 5 angedeutet ist. Für alle diese Leitungen 6 gilt deshalb der gleiche Verlegeweg in der Nähe des Leitungshalters; horizontale Biegungen der Leitungen an einer gemeinsamen Biegungsstelle können mit dem gleichen Radius ausgebildet werden.

Beispielsweise dann, wenn gemeinsam mit den Leitungen 6, die vorzugsweise den gleichen Außendurchmesser aufweisen, dünnere Leitungen verlegt werden müssen oder wenn es darum geht sicherzustellen, daß zum Beispiel bei einer Verdrahtung an der Decke die Leitungen 6 nicht mit der Zeit aus ihren Klemmhalterungen zwischen den Kanten 12 herausrutschen, kommen die nach einwärts gerichteten den Kanal 5 überdeckenden Leisten 7 zur Wirkung. Sie überragen mit ihren freien Rändern die lichte Weite der Klemmstellen zwischen den Kantenpaaren 12 und gewährleisten damit eine formschlüssige Halterung der in dem Kanal 5 aufgenommenen Leitungen 6. Da die Leisten 7 hakenartig nach innen zu gebogen sind (vergleiche Fig. 5), werden selbst solche Leitungsteile sicher gehalten, die aus welchen Gründen auch immer in den Klemmstellen zwischen den Kantenpaaren 12 keine Halterung finden. Dies ist in Fig. 5 durch zwei Leitungen 60 angedeutet, die veranschaulichen, wie sich in dem Kanal 5 die Leitungen unter den Leisten 7 verhaken können. Gleichzeitig erlaubt die Schrägstellung der Leisten 7 zusammen mit den Einführschrägen 17 auch ein Senkrecht-Einlegen der Leitungen von oben her.

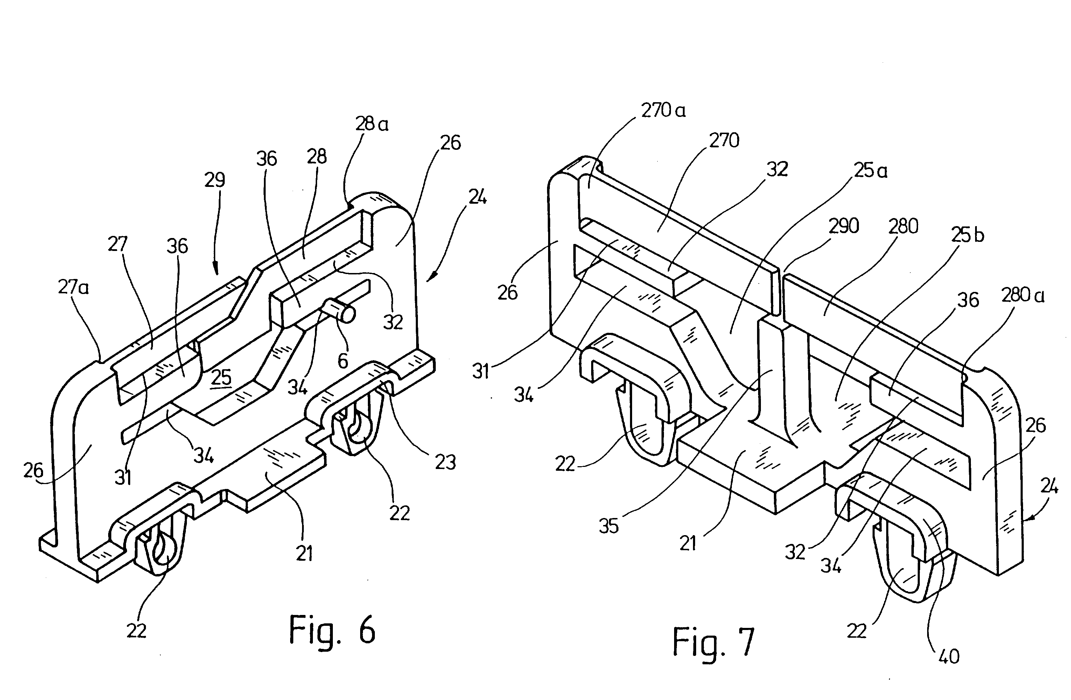

In den Fig. 6, 7 sind zwei weitere Ausführungsformen neuer Leitungshalter veranschaulicht, die sich ebenfalls dadurch auszeichnen, daß sie für die automatische Leitungsverlegung mittels eines Leitungsverlegekopfes 10 geeignet und bestimmt sind und einen für die Leitungsaufnahme bestimmten Kanal aufweisen, der von dem Leitungsverlegekopf über seine Länge durchfahrbar gestaltet ist, wobei die den Kanal begrenzenden Rückhaltemittel für die Leitungen dem durchlaufenden Leitungsverlegewerkzeug oder -kopf vorübergehend federelastisch ausweichend ausgebildet sind und das Leitungsvorlegewerkzeug durch die Einfuhröffnung von oben her in den Kanal ragt.

Bei der Ausführungsform nach Fig. 6 ist ein plattenförmiger Sockel 21 vorgesehen, an dem zwei Rastfüße 22 axial etwas vertieft in U-förmigen Ausbiegungen 23 liegend angeformt sind. Mit dem Sockel 21 ist einstückig ein Formteil 24 verbunden, das im wesentlichen in Gestalt einer rechteckigen Platte ausgebildet ist, die quer von einem im Querschnitt etwa trapezförmigen Kanal 25 zur Leitungsaufnahme durchdrungen ist. Der Kanal 25 ist beidseitig durch zwei Schenkel 26 bildende Bereiche der Platte begrenzt, an denen beidseitig des Kanals 25 zwei biegsame Halteglieder in Gestalt zweier federelastischer, dünner Zungen 27, 28 endseitig angeformt sind. Die Dicke der Zungen 27, 28 ist kleiner als die Dicke des Formstückes 24; sie können deshalb als dünne Plättchen bezeichnet werden, die hochkant stehend an ihrer jeweiligen Wurzel bei 27a bzw. 28a an das Formstück 24 angeformt sind. Die beiden Zungen 27, 28 ragen über die lichte Weite des Kanales 5 und sind bei 29 einander übergreifend ausgebildet. Da sie über ihre Länge bei 31, 32 jeweils über einen Schlitz in dem Formteil 24 freigestellt sind, können sie nach Art von Schwingtüren federelastisch vor dem Durchfahrleitungsverlegekopf 10 seitlich ausweichen und nach dessen Passieren wieder in ihre in Fig. 6 dargestellte Ausgangsstellung zurückkehren, womit die in dem Kanal 5 abgelegte Leitung sicher eingeschlossen und gehalten ist und die oben liegende Einfuhröffnung verschlossen ist.

Beidseitig des Kanales 25 gehen unterhalb der beiden Zungen 27, 28 von diesem zwei horizontale taschenartige Erweiterungen 34 ab, die in Gestalt parallelflankig begrenzter Schlitze ausgebildet sind, deren Weite etwas kleiner als der Durchmesser der zu verlegenden Leitungen gewählt ist.

Die einzelnen Leitungen 6 werden nach der Ablage in dem Kanal 25 durch eine kleine seitliche Verlegebewegung des Leitungsverlegekopfes 10 in den jeweiligen Schlitz bei 34 eingeschoben, wie dies in Fig. 6 für eine Leitung 6 veranschaulicht ist. Dieses Einschieben wird durch die trapezartige Querschnittsgestaltung des Kanales 25 erleichtert. In den Schlitzen sind die Leitungen 6 exakt geordnet nebeneinanderliegend reibschlüssig gehaltert. Grundsätzlich wäre es natürlich auch möglich, entsprechende taschenartige Erweiterungen 34 auf der Bodenseite des Kanales 25 vorzusehen, um damit eine vertikale Aufreihung der Leitungen 6 zu ermöglichen.

Die Ausführungsform nach Fig. 7 schließlich, ist im wesentlichen gleich wie jene nach Fig. 6 gestaltet. Gleiche Teile sind deshalb mit gleichen Bezugszeichen versehen und nicht nochmals erläutert.

Unterschiedlich zur Ausführungsform nach Fig. 6 ist hier der Kanal 25 durch ein von dem Sockel 21 nach oben zu vorragendes stiftartiges Trennglied 35 in Längsrichtung in zwei nebeneinander verlaufende Teilkanäle 25a, 25b unterteilt, um damit die eingelegten Leitungsbündel voneinander zu trennen. Die beiden Zungen 270, 280 sind hier gleich gestaltet. Sie weisen die Form zweier rechteckiger länglicher dünner Leisten auf, die in dem Bereich oberhalb des Trenngliedes 35 bei 290 stirnseitig dicht aneinander heranragen und damit gemeinsam mit dem Trennglied einen formschlüssigen Abschluß der beiden Kanäle 25a, b gewährleisten.

Beide Zungen 270, 280 weichen widerum nach Art von Schwingtüren federelastisch zur Seite aus, wenn ein Leitungsverlegekopf 10 den jeweiligen Kanal 25a oder b durchfährt und in diesen eine Leitung 6 einlegt, die sodann durch eine kleine seitliche Verlegebewegung über die schräge Kanalwand in die benachbarte horizontale taschenförmige Erweiterung 34 eingebracht wird, in der sie reibschlüssig gehalten wird.

Die in verschiedenen Ausführungsformen dargestellten Leitungshalter sind alle einstückig aus Kunststoff, beispielsweise Polyethylen oder Polyamid hergestellt. Ihre Befestigungseinrichtungen sind nur beispielhaft veranschaulicht; sie können auch anders gestaltet sein. In der Regel muß aber sichergestellt sein, daß eine verdrehsichere Befestigung des jeweiligen Leitungshalters auf seiner Unterlage gegeben ist, so daß das Leitungsverlegewerkzeug in den jeweiligen Eingang des Kanales 5 oder 25 findet.

Die Zungen 27, 28 bzw, 270, 280 der Ausführungsform nach den Fig. 6, 7 können auch in Form von Stäben ausgebildet sein, wie es auch denkbar ist, mehrere plattenförmige Formkörper 24 im Abstand nebeneinander stehend auf einem gemeinsamen Sockel anzuordnen.

Der neue Leitungshalter kann sowohl in der Ausführungsform nach den Fig. 1 bis 5 als auch in jener nach Fig. 6 oder 7 von beiden Seiten her von dem Leitungsverlegewerkzeug durchfahren werden. Die Rückhaltermittel für die in dem Kanal 5 bzw. 25 und 25a, b abgelegten Leitungen sind entweder formschlüssig, wie die Leisten 7 (Fig. 1) oder die Zungen 27, 28 bzw. 270, 280 (Fig. 6, 7) oder sie können auch reibschlüssig sein, wie die zwischen den Kanten 12 der federnden Bügel 11 (Fig. 2) ausgebildeten Klemmstellen oder die Klemmstellen zwischen den Begrenzungswänden der taschenartigen Erweiterungen 34 in den Fig. 6, 7. Da diese taschenartigen Erweiterungen nach oben jeweils durch fingerartige Fortsätze 36 begrenzt sind, die lediglich einenends an dem zugeordneten Schenkel 26 angeformt sind, können diese fingerartigen Fortsätze 36 beim Einlegen der Leitungen etwas elastisch nach oben und/oder zur Seite federelastisch ausweichend gestaltet sein. Bei der Ausführungsform nach Fig. 6 ragen sie in den Kanal 25, so daß sie erforderlichenfalls von dem durchfahrenden Verlegewerkzeug auch elastisch zur Seite geschwenkt werden können.

Schließlich kann auch bei der Ausführungsform nach den Fig. 1 bis 5 der Kanal 5 durch wenigstens ein aufrecht stehendes Trennglied in Form einer Trennwand in wenigstens zwei parallele Teilkanäle ähnlich Fig. 7 unterteilt werden.

Zur Identifizierung der Leitungshalter und/oder der darin gehalterten Leitungen kann der Sockel 1 oder 21 und/oder ein mit diesem verbundenes Teil mit einer Codierung 40 versehen sein, die von einem Sensor an dem Leitungsverlegekopf 10 her ablesbar ist. Beispiele dafür sind in den Fig. 4, 7 schematisch angedeutet.

Bei der Ausführungsform nach den Fig. 1 bis 5 sind an jeder Klemmstelle 2 federelastische Bügel 11 vorgesehen. Es sind grundsätzlich auch Ausführungsformen denkbar, bei denen lediglich ein solcher federelastischer Bügel 11 mit einer beweglichen Klemmkante 12 vorhanden ist, die mit einem festen starren Widerlager beispielsweise in Gestalt einer entsprechenden plattenartigen Verlängerung des gegenüberliegenden Armteils 13 zusammenwirkt. Auch dieses Widerlager kann mit wenigstens einer Klemmkante 12 ausgebildet sein.

Entsprechende Klemmmittel, wie sie durch die Federbügel 11 gebildet sind, können im übrigen auch bei den Ausführungsformen nach den Fig. 6, 7 an dem plattenförmigen Formkörper 24 angeformt sein.

## Patentansprüche

1. Leitungshalter für Verdrahtungen in Niederspannungsschaltkreisen elektrischer Geräte, mit einem mit Befestigungseinrichtungen versehenen Sockel (1;21) und mit wenigstens zwei mit diesen verbundenen Schenkeln (3;26), zwischen denen ein die Leitungen aufnehmender durchgehender Kanal (5;25) begrenzt ist, der unter Ausbildung einer Leitungseinführöffnung an einer Seite über seine Länge geöffnet ist und dem federelastische Rückhaltemittel (7,11; 27,28; 270,280) für in dem Kanal aufgenommene Leitungen zugeordnet sind, die normalerweise in einer den freien Durchtrittsquerschnitt des Kanales und/oder der seitlichen Leitungseinführöffnung begrenzenden Stellung stehen, dadurch gekennzeichnet, daß der Kanal (5, 25) für ein durch die Einführöffnung ragendes in Leitungslängsrichtung bewegtes Werkzeug (10) über seine Länge durchfahrbar gestaltet ist und daß die den Kanal begrenzenden Schenkel (3; 26) und/oder die Rückhaltemittel (7, 11; 27, 28; 270, 280) dem durchlaufenden Werkzeug vorübergehend federelastisch ausweichend ausgebildet sind.

2. Leitungshalter nach Anspruch 1, dadurch gekennzeichnet, daß er wenigstens ein die Leitungseinführöffnung zumindest teilweise überragendes Halteglied (7; 27, 28; 270, 280) aufweist, das federelastisch ausweichend ausgebildet und/oder gelagert ist.

3. Leitungshalter nach Anspruch 2, dadurch gekennzeichnet, daß das Halteglied eine seitlich der Leitungseinführöffnung gelagerte biegsame Zunge oder Leiste (27, 28; 7) aufweist.

4. Leitungshalter nach Anspruch 2, dadurch gekennzeichnet, daß beidseitig des Kanals (5, 25) jeweils eine biegsame Zunge oder Leiste (27, 28; 7) angeordnet ist.

5. Leitungshalter nach Anspruch 4, dadurch gekennzeichnet, daß die beiden Zungen (27, 28) sich mit ihren freien Enden übergreifend ausgebildet sind.

6. Leitungshalter nach Anspruch 4 oder 5, dadurch gekennzeichnet, daß jede Zunge (27, 28; 270, 280) in Gestalt eines hochkant stehenden dünnen Plättchens ausgebildet ist.

7. Leitungshalter nach einem der vorhergehenden Ansprüche, dadurch gekennzeichnet, daß der Kanal (25) wenigstens eine taschenartige Erweiterung (34) aufweist, deren lichte Weite kleiner/gleich dem Leitungsaußendurchmesser ist.

8. Leitungshalter nach einem der vorhergehenden Ansprüche, dadurch gekennzeichnet, daß der Kanal (25) durch wenigstens ein vom Boden vorragendes Trennglied (35) in Längsrichtung unterteilt ist.

9. Leitungshalter nach einem der vorhergehenden Ansprüche, dadurch gekennzeichnet, daß der Kanal (25) durch ein mit dem Sockel (21) verbundenes, die Schenkel (26) enthaltendes Formteil (24) verläuft, das im wesentlichen in Gestalt einer quer zu der Kanallangsrichtung ausgerichteten Platte ausgebildet ist.

10. Leitungshalter nach einem der vorhergehenden Anspruche, dadurch gekennzeichnet, daß er an den Kanal (5) auf wenigstens einer Stirnseite anschließend federelastische Klemmmittel (11) für in den Kanal eingelegte Leitungen (6) aufweist.

11. Leitungshalter nach Anspruch 10, dadurch gekennzeichnet, daß die Klemmmittel wenigstens einen federelastischen Klemmbügel (11) aufweisen, der sich über die Höhe des Kanals (5) erstreckt und mit einem ihm gegenüberliegenden Klemmbügel (11) oder einem Widerlager eine Klemmstelle begrenzt.

12. Leitungshalter nach Anspruch 11, dadurch gekennzeichnet, daß die Klemmstelle zumindest auf einer Seite durch eine Klemmkante (12) an einem Klemmbügel (11) oder dem Widerlager begrenzt ist.

13. Leitungshalter nach einem der Ansprüche 11 oder 12, dadurch gekennzeichnet, daß ein Klemmbügel (11) und/oder das Widerlager eine trichterförmig nach innen weisende Einführschräge (20) für das Leitungsverlegewerkzeug (6) aufweist.

14. Leitungshalter nach einem der Ansprüche 11 bis 13, dadurch gekennzeichnet, daß der Klemmbügel (11) ein im wesentlichen teilzylindrisch eingerolltes Wandteil aufweist.

15. Leitungshalter nach Anspruch 14, dadurch gekennzeichnet, daß das teilzylindrisch eingerollte Wandteil an einem mit dem Sockel (1) oder einem Schenkel (3) verbundenen Haltearm (13) angeordnet ist, mit dem es über zumindest einen Teil seiner Hohe verbunden ist.

16. Leitungshalter nach Anspruch 15, dadurch gekennzeichnet, daß der Haltearm (13) von dem benachbarten Schenkel (3) durch einen Schlitz (16) getrennt ist, der sich über zumindest einen Teil der Höhe des Schenkels (3) erstreckt.

17. Leitungshalter nach einem Ansprüche 2 bis 16, dadurch gekennzeichnet, daß das an wenigstens einem Schenkel (3) angeordnete Halteglied (7) stirnseitig eine trichterförmig nach innen weisende Einführschräge (70) für das Leitungsverlegewerkzeug aufweist.

18. Leitungshalter nach einem der Ansprüche 2 bis 17, dadurch gekennzeichnet, daß das an wenigstens einem Schenkel (3) angeordnete Halteglied (7) und/oder gegebenenfalls die Klemmmittel (11) mit einer zum Kanalboden hin geneigten Einführschräge (8; 17) für die Leitungen ausgebildet sind.

19. Leitungshalter nach einem der vorhergehenden Ansprüche, dadurch gekennzeichnet, daß der Sockel (1) eine in den Kanal (5) führende Durchbrechung aufweist (Fig. 2).

20. Leitungshalter nach einem der vorhergehenden Ansprüche, dadurch gekennzeichnet, daß an dem Sockel (1, 21) angeordnete Befestigungsmittel (2) verdrehsicher ausgebildet sind.

21. Leitungshalter nach einem der vorhergehenden Ansprüche, dadurch gekennzeichnet, daß an dem Sockel (1, 21) oder einem mit diesem verbundenen Teil eine von außen ablesbare Codierung (40) angeordnet ist.

22. Leitungshalter nach einem der vorhergehenden Ansprüche, dadurch gekennzeichnet, daß er einstückig aus einem Kunststoff hergestellt ist.

## Claims

1. Wire retainer for connecting wires in low-Voltage circuit of electrical apparatus, having a base (1; 21) provided with fasteners and having at least two legs (3; 26) joined thereto, between which a continuous channel (5; 25) receiving the wires is defined, said channel being open on one side over its length to form a wire insertion opening and being assigned spring-elastic hold-back means (7, 11; 27, 28; 270, 280) for wires received in the channel, these hold-back means normally being in a position that defines the free through cross-section of the channel and/or the lateral wire insertion opening, characterised in that the channel (5, 25) is designed so that a tool (10) protruding through the insertion opening and moving in the longitudinal direction of the wire can pass through it over its length, and that the legs (3; 26) defining the channel and/or the hold-back means (7, 11; 27, 28; 270, 280) are formed so as to momentarily yield spring-elastically to the tool passing through.

2. Wire retainer according to Claim 1, characterised in that it has at least a holding member (7; 27, 28; 270,280) which at least partially protrudes over the wire insertion opening and which is formed and/or supported to yield spring-elastically.

3. Wire retainer according to Claim 2, characterised in that the holding member has a flexible tongue or strip (27, 28; 7) supported laterally of the wire insertion opening.

4. Wire retainer according to Claim 2, characterised in that a flexible tongue or strip (27, 28; 7) is located on each side of the channel (5, 25).

5. Wire retainer according to Claim 4, characterised in that the two tongues (27, 28) are formed with their free ends overlapping one another.

6. Wire retainer according to Claim 4 or 5, characterised in that each tongue (27, 28; 270, 280) is formed as a thin small plate standing on edge.

7. Wire retainer according to one of the preceding claims, characterised in that the channel (25) has at least one pocket-like enlargement (34), the inside width of which is less than or equal to the outside diameter of the wire.

8. Wire retainer according to one of the preceding claims, characterised in that the channel (25) is subdivided longitudinally by at least one separator member (35) protruding from the bottom.

9. Wire retainer according to one of the preceding claims, characterised in that the channel (25) extends through a shaped part (24), which is joined to the base (21) and containing the legs (26) and is formed essentially as a plate oriented transversely to the longitudinal direction of the channel.

10. Wire retainer according to one of the preceding claims, characterised in that it has spring-elastic clamping means (11) adjoining the channel (5) on at least one face end for wires (6) placed in the channel.

11. Wire retainer according to Claim 10, characterised in that the clamping means have at least one spring-elastic clamping bow (11), which extends over the height of the channel (5) and, with a clamping bow (11) or an abutment opposite it, defines a clamping site.

12. Wire retainer according to Claim 11, characterised in that the clamping site is defined, at least on one side, by a clamping edge (12) on a clamping bow (11) or on the abutment.

13. Wire retainer according to one of Claims 11 or 12, characterised in that a clamping bow (11) and/or the abutment has an insertion slope (20) pointing inwards in a funnel-like manner for the placement tool (6).

14. Wire retainer according to one of Claims 11 to 13, characterised in that the clamping bow (11) has a wall portion rolled inwards essentially in partially cylindrical manner.

15. Wire retainer according to Claim 14, characterised in that the wall portion rolled inwards in partially cylindrical form is located on a retaining arm (13) joined to the base (1) or to a leg (3), with which arm it is joined over at least a portion of its height.

16. Wire retainer according to Claim 15, characterised in that the retaining arm (13) is separated from the adjacent leg (3) by a slit (16), which extends over at least a portion of the height of the leg (3).

17. Wire retainer according to one of Claims 2 to 16, characterised in that the holding member (7) located on at least one leg (3) has on its face end an insertion slope (70) pointing inwards in a funnel-like manner for the tool.

18. Wire retainer according to one of Claims 2 to 17, characterised in that the holding member (7) located on at least one leg (3) and/or possibly the clamping means (11) are formed with an insertion slope (8; 17) inclined towards the channel bottom for the wires.

19. Wire retainer according to one of the preceding claims, characterised in that the base (1) has an aperture leading into the channel (5) (Figure 2).

20. Wire retainer according to one of the preceding claims, characterised in that fasteners (2) located on the base (1, 21) are formed to be secure against relative rotation.

21. Wire retainer according to one of the preceding claims, characterised in that a code (40) readable from the outside is located on the base (1, 21) or on some part joined to it.

22. Wire retainer according to one of the preceding claims, characterised in that it is formed in one piece from a plastic.

## Revendications

1. Elément support de conducteurs pour le câblage de circuits basse tension d'appareils électriques, comportant un socle (1; 21) pourvu de moyens de fixation et au moins deux ailes (3; 26) qui sont liées à celui-ci et délimitent un canal (5; 25) débouchant destiné à recevoir les conducteurs, qui est ouvert d'un côté sur toute sa longueur et forme une ouverture d'introduction des conducteurs et auquel sont associés des moyens élastiques (7, 16; 27, 28; 270, 280) de retenue des conducteurs placés dans le canal, lesquels moyens occupent normalement une position qui délimite la section libre de passage et/ou l'ouverture latérale d'introduction des conducteurs, caractérisé par le fait que le canal (5, 25) est agencé pour permettre le passage sur toute sa longueur d'un outil (10) engagé dans l'ouverture d'introduction, dans la direction longitudinale des conducteurs, et par le fait que les ailes (3, 26) délimitant le canal et/ou les moyens de retenue (7, 11; 27, 28; 270, 280) sont agencés de manière à ce qu'ils soient repoussés élastiquement, momentanément, par l'outil engagé.

2. Elément de support de conducteurs selon la revendication 1, caractérisé par le fait qu'il présente au moins un élément de retenue (7, 11; 27, 28; 270, 280) au moins partiellement en saillie par rapport à l'ouverture d'introduction des conducteurs, qui est agencé et/ou monté de manière à s'écarter élastiquement.

3. Elément de support de conducteurs selon la revendication 2, caractérisé par le fait que le moyen de retenue comporte une languette ou une patte (27, 28 ; 7) flexible disposée sur le côté de l'ouverture d'introduction des conducteurs.

4. Elément de support de conducteurs selon la revendication 2, caractérisé par le fait qu'une languette ou une patte (27, 28; 7) flexible est disposée de chaque côté du canal (5, 25).

5. Elément de support de conducteurs selon la revendication 4, caractérisé par le fait que les deux languettes (27, 28) sont agencées de telle sorte que leurs extrémités libres se chevauchent.

6. Elément de support de conducteurs selon la revendication 4 ou 5, caractérisé par le fait que chaque languette (27, 28; 270, 280) est réalisée sous la forme d'une plaquette de faible épaisseur placée sur chant.

7. Elément de support de conducteurs selon l'une des revendications précédentes, caractérisé par le fait que le canal (25) présente au moins un prolongement (34) en cul-de-sac dont la largeur libre est inférieure/égale au diamètre extérieur des conducteurs.

8. Elément de support de conducteurs selon l'une des revendications précédentes, caractérisé par le fait que le canal (25) est subdivisé dans la direction longitudinale par au moins un élément de séparation (35) faisant saillie sur le fond.

9. Elément de support de conducteurs selon l'une des revendications précédentes, caractérisé par le fait que le canal (25) s'étend dans une pièce moulée (24) liée au socle (21), contenant les ailes (26), qui à essentiellement une forme de plaque orientée transversalement à la direction longitudinale du canal.

10. Elément de support de conducteurs selon l'une des revendications précédentes, caractérisé par le fait qu'il présente au niveau du canal (5), à la suite d'au moins une face d'about, des moyens de serrage (11) élastiques pour des conducteurs (6) introduits dans le canal.

11. Elément de support de conducteurs selon la revendication 10, caractérisé par le fait que les moyens de serrage comprennent au moins une boucle de serrage (11) élastique qui s'étend sur la hauteur du canal (5) et délimite un point de serrage avec une boucle de serrage (11) disposée en vis-à-vis ou avec une contre-butée.

12. Elément de support de conducteurs selon la revendication 11, caractérisé par le fait que le point de serrage est délimité d'un côté au moins par une arête de serrage (12) d'une boucle de serrage (11) ou de la contre-butée.

13. Elément de support de conducteurs selon l'une des revendications 11 ou 12, caractérisé par le fait qu' une boucle de serrage (11) et/ou la contre-butée présente un biseau (20) d'entrée en forme d'entonnoir orienté en direction de l'intérieur, pour l'outil (6) de mise en place des conducteurs.

14. Elément de support de conducteurs selon l'une des revendications 11 à 13, caractérisé par le fait que la boucle de serrage (11) présente une partie de paroi enroulée, essentiellement partiellement cylindrique.

15. Elément de support de conducteurs selon la revendication 14, caractérisé par le fait que la partie de paroi enroulée partiellement cylindrique est disposée sur un bras (13) lié au socle (1) ou à une aile (3) et est reliée à celui-ci sur une partie au moins de sa hauteur.

16. Elément de support de conducteurs selon la revendication 15, caractérisé par le fait que le bras (13) est séparé de l'aile (3) voisine par une fente (16) qui s'étend sur une partie au moins de la hauteur de ladite aile (3).

17. Elément de support de conducteurs selon l'une des revendications 2 à 16, caractérisé par le fait que l'élément de retenue (7) disposé sur au moins une aile (3) est pourvu côté frontal d'au moins un biseau (70) d'entrée en forme d'entonnoir tourné vers l'intérieur, pour l'outil de mise en place des conducteurs.

18. Elément de support de conducteurs selon l'une des revendications 2 à 17, caractérisé par le fait que l'élément de retenue (7) disposé sur au moins une aile (3) et/ou éventuellement les moyens de serrage (11) comportent un biseau (8; 17) d'entrée pour les conducteurs, incliné en direction du fond du canal.

19. Elément de support de conducteurs selon l'une des revendications précédentes, caractérisé par le fait que le socle (1) présente une découpe menant au canal (5) (figure 2).

20. Elément de support de conducteurs selon l'une des revendications précédentes, caractérisé par le fait que des moyens de fixation (2) interdisant la rotation sont formés sur le socle (1, 21).

21. Elément de support de conducteurs selon l'une des revendications précédentes, caractérisé par le fait qu'un code (40) lisible de l'extérieur est appliqué sur le socle (1, 21) ou sur un élément lié à celui-ci.

22. Elément de support de conducteurs selon l'une des revendications précédentes, caractérisé par le fait qu'il est réalisé d'une pièce en un matériau synthétique.
